# EUROPEAN PATENT SPECIFICATION

(11) **EP 3 403 890 B1**
(45) Date of publication and mention of the grant of the patent: **12.02.2020**
(21) Application number: 18169703.8
(22) Date of filing: 27.04.2018
(51) Int. Cl.: B60S 1/52, B05B 1/10

(54) **IMPROVED CHIP FOR A WINDSHIELD WASHER SYSTEM WITH FLEXIBLY DETERMINABLE DIRECTIONAL CHARACTERISTICS**
VERBESSERTER CHIP FÜR EINE SCHEIBENWASCHANLAGE MIT FLEXIBEL BESTIMMBAREN RICHTCHARAKTERISTIKEN
PUCE AMÉLIORÉE POUR UN SYSTÈME DE LAVE-GLACE COMPORTANT DES CARACTÉRISTIQUES DIRECTIONNELLES POUVANT ÊTRE DÉTERMINÉES DE MANIÈRE FLEXIBLE

(30) Priority: 16.05.2017 DE 102017110583
(43) Date of publication of application: 21.11.2018
(73) Proprietor: Illinois Tool Works Inc., Glenview, IL 60025 (US)
(72) Inventor: Peralta, Frank, 67255 Sonderhofen-Bolzhausen (DE); Medina-Garcia, Oscar, 97980 Bad Mergentheim (DE)
(74) Representative: HGF Limited

(56) References cited:
- WO-A1-2016/060736
- JP-A- 2004 352 167
- US-A1- 2005 195 239
- US-A1- 2007 257 133

## Description

The invention relates to a chip for a windshield washer system of a vehicle front or rear window, to a windshield washer system of a vehicle front or rear window with a chip which is held in a chip holder, and to a method for producing a chip for a windshield washer system of a vehicle front or rear window.

A chip or insert body of the type in question is shown in EP 2144702 B1.

US 2005/0195239 A1 likewise shows a chip or insert body of the type in question, which consists of two parts connected by means of a film hinge. This document is considered to be the prior art closest to the subject-matter of claim 1.

The inventors have found this prior art to be disadvantageous since spray directions of the beam directions which can be produced by the insert body can be defined only to a limited extent and/or potential sealing problems arise because of a two-part design.

It is the object of the present invention to improve these disadvantages.

The object is achieved by the independent claims. Advantageous developments are defined in the dependent claims.

In particular, the object is achieved by a chip for a windshield wiper system of a vehicle front or rear window, wherein the chip is injection-molded by an injection molding process, the chip being arranged to be inserted into a chip holder of the windshield washer system, wherein the chip has a structure for generating a spray beam, wherein the structure has at an end face of the chip an outlet opening having an opening edge, wherein the outlet opening is configured to allow the spray beam to emerge from the chip during operation of the windshield washer nozzle system onto the vehicle front or rear window, wherein the outlet opening is delimited by the opening edge all around the complete opening circumference by the chip, and the outlet opening and the opening edge are formed all around and integrally by means of the injection molding process.

The object is furthermore achieved in particular by a windshield washer system of a vehicle front or rear window with a chip according to the invention which is held in a chip holder.

The object is furthermore achieved in particular by a method for producing a chip for a windshield washer system of a vehicle front or rear window, wherein the chip is arranged to be inserted into a chip holder of the window washer system, wherein the chip has a structure for generating a spray beam, wherein the structure has at an end face of the chip an outlet opening and wherein the outlet opening has an opening edge, wherein the outlet opening is configured to allow the spray beam to emerge from the chip during operation of the windshield washer nozzle system onto the vehicle front or rear window; including the step
- casting the chip by means of an injection molding process: wherein the outlet opening and the opening edge are formed all around and integrally by means of the injection molding process such that the outlet opening is delimited continuously over the entire opening circumference by the chip by means of the opening edge.

By this means, it is possible to change the outlet direction of the spray beam in any direction, even in the vertical direction. A chip folding design as shown in US 2005/0195239 A1 mentioned at the beginning does not have to be used here.

In a further exemplary embodiment of the present invention, the outlet opening has a central axis and the chip has a horizontal central plane, wherein the central axis is inclined with respect to the horizontal plane at an angle.

This produces a vertically angled spray beam, which is advantageous, for example, for certain windshields. In this case, the chip holder then does not have to be changed in its orientation (or not to the same extent), and a notch or groove also does not have to be provided on the chip holder in order to achieve said angling of the beam all around.

In a further exemplary embodiment of the present invention, the structure is an oscillation structure and the spray beam is an oscillating spray beam.

By this means, the advantages of the invention are achieved above all with an oscillation structure which is sensitive to opening modification - by the provision of an opening which is provided entirely in the chip and is surrounded by the chip, the opening orientation can be changed without the opening profile in partial regions having to change in the process.
In a further exemplary embodiment of the present invention, the chip has a top side and a bottom side, and wherein the chip further comprises two spot beam structures for generating each a respective spot beam, and the spot beam structures are arranged on one of the upper side and lower side, and the oscillation structure is arranged on the corresponding other one of the upper side and lower side, wherein the chip has a collection chamber from which three separate output channels respectively lead to one of the structures.

This permits a highly space-saving arrangement with a simultaneously large collection chamber since the collection chamber can be used for all three structures.
In addition, this achieves a uniform generation of a spray beam since less mutual influencing occurs because of the separate channels.

In a further exemplary embodiment of the present invention, the collecting chamber is open towards the upper side and the lower side.

By this means, the collecting chamber can be provided with a very large volume. In contrast to the configuration shown in EP2144702 mentioned at the beginning, separating surfaces between upper side and lower side in the region of the preliminary chamber 20 there and of the collecting chamber 30 there are therefore dispensed with.

In a further exemplary embodiment of the present invention, the collecting chamber extends at least over 50% of the chip width and at least 25% of the chip length.

By this means, a highly uniform supply of the individual structures can be ensured.

In a further exemplary embodiment of the present invention, the output channels which lead to the point beam structures lead across a respective connection opening between the upper side and the lower side.

This achieves an even more uniform production of a spray beam since the length of the separate channels is increased even further, but in a space-saving manner.

The invention will now be illustrated further by way of example with reference to drawings, in which:
- Figure 1: shows a perspective front view,
- Figure 2: shows a perspective bottom view,
- Figure 3: shows a perspective top view,
- Figure 4: shows a perspective sectional view,
- Figure 5: shows a lateral sectional view of a chip according to the invention for a windshield washer system of a vehicle front or rear window.

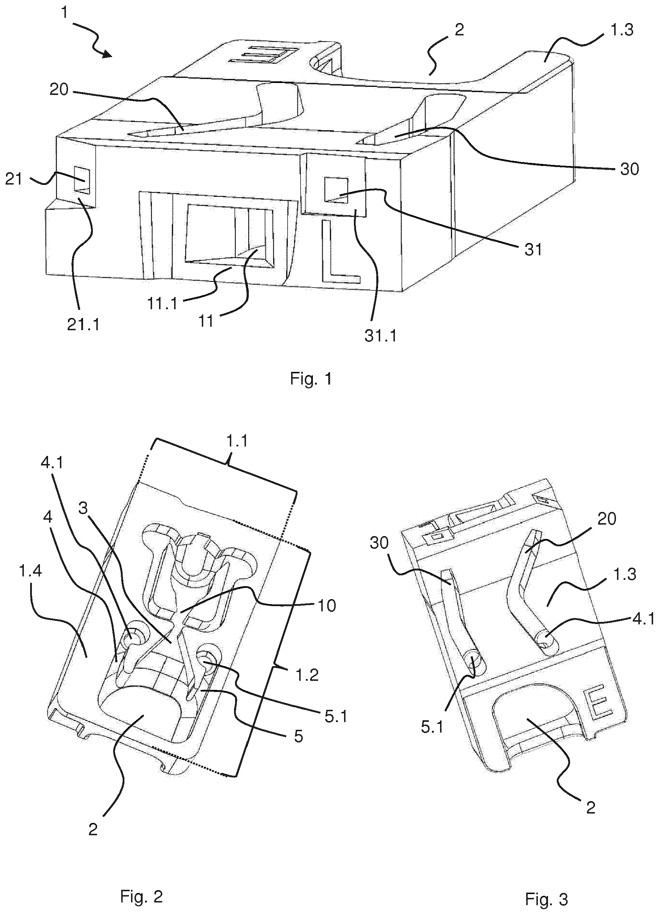

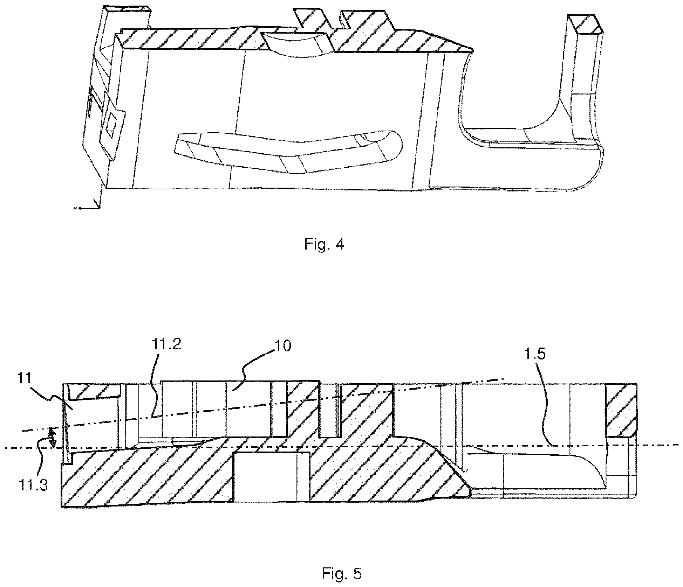

The chip 1 is injection-molded by an injection molding process. It is arranged to be inserted into a chip holder of the windshield washer system. It has structures 10, 20, 30 for generating a spray beam, wherein the structures 10, 20, 30 each have at an end face of the chip 1 an outlet opening 11, 21, 31 having an opening edge 11.1, 21.1, 31.1. The outlet openings 11, 21, 31 are configured to allow the respective spray beam to emerge from the chip 1 during operation of the windshield washer nozzle system onto the vehicle front or rear window. The outlet openings 11, 21, 31 are delimited by the respective opening edge 11.1, 21.1, 31.1 all around the complete opening circumference by the chip 1, and the respective opening 11, 21, 31 and the respective opening edge 11.1, 21.1, 31.1 are formed all around and integrally by means of the injection molding process. The outlet opening 11, 21, 31 has a central axis 11.2, see fig. 5, and the chip 1 has a horizontal central plane 1.5, wherein the central axis 11.2 is inclined with respect to the horizontal plane 1.5 at an angle 11.3. One of the structures 10, 20, 30 is an oscillation structure 10 and the corresponding spray beam is an oscillating spray beam. The chip 1 has a top side 1.3, see fig. 3, and a bottom side 1.4, see fig. 2. The chip 1 furthermore comprises two spot beam structures 20, 30 for generating each a respective spot beam. The spot beam structures 10, 20 are arranged on the upper side 1.3 and the oscillation structure 10 is arranged on the lower side 1.4. The chip 1 has a collection chamber 2 from which three separate output channels 3, 4, 5 respectively lead to one of the structures 10, 20, 30. The collecting chamber 2 is open towards the upper side 1.3 and the lower side 1.4. It extends at least over 50% of the chip width 1.1 and at least 25% of the chip length 1.2. The output channels 4, 5 which lead to the point beam structures 20, 30 lead across a respective connection opening 4.1, 5.1 between the upper side and the lower side.

### List of reference signs

- 1: Chip
- 1.1: Chip width
- 1.2: Chip length
- 1.3: Upper side
- 1.4: Lower side
- 1.5: Horizontal central plane
- 2: Collecting chamber
- 3: Output channel
- 4: Output channel
- 4.1: Connecting opening
- 5: Output channel
- 5.1: Connecting opening
- 10: Oscillation structure
- 11: Outlet opening
- 11.1: Opening edge
- 11.2: Central axis
- 11.3: Angle
- 20: Spot beam structure
- 21: Outlet opening
- 21.1: Opening edge
- 30: Spot beam structure
- 31: Outlet opening
- 31.1: Opening edge

## Claims

1. A chip (1) for a windshield washer system of a vehicle front or rear window, wherein the chip (1) is injection-molded by an injection molding process, the chip (1) being arranged to be inserted into a chip holder of the windshield washer system, wherein the chip (1) has a structure (10, 20, 30) for generating a spray beam, wherein the structure (10, 20, 30) has at an end face of the chip (1) an outlet opening (11, 21, 31) having an opening edge (11.1, 21.1, 31.1), wherein the outlet opening (11, 21, 31) is configured to allow the spray beam to emerge from the chip (1) during operation of the windshield washer nozzle system onto the vehicle front or rear window, **characterized in that** the opening (11, 21, 31) is delimited by the opening edge (11.1, 21.1, 31.1) all around the complete opening circumference by the chip (1), and the outlet opening (11, 21, 31) and the opening edge (11.1, 21.1, 31.1) are formed all around and integrally by means of the injection molding process.

2. The chip (1) as claimed in claim 1, wherein the outlet opening (11, 21, 31) has a central axis (11.2) and the chip has a horizontal central plane (1.5), wherein the central axis (11.2) is inclined with respect to the horizontal plane (1.5) at an angle (11.3).

3. The chip (1) as claimed in one of the preceding claims, wherein the structure (10) is an oscillation structure (10) and the spray beam is an oscillating spray beam.

4. The chip (1) as claimed in claim 3, wherein the chip (1) has a top side (1.3) and a bottom side (1.4), and wherein the chip (1) further comprises two spot beam structures (20, 30) for generating each a respective spot beam, and wherein the spot beam structures (20, 30) are arranged on one of the upper side (1.3) and the lower side (1.4), and the oscillation structure (10) is arranged on the corresponding other one of the upper side (1.3) and lower side (1.4), wherein the chip (1) has a collection chamber (2) from which three separate output channels (3, 4, 5) respectively lead to one of the structures (10, 20, 30).

5. The chip (1) as claimed in claim 4, wherein the collecting chamber (2) is open towards the upper side (1.3) and the lower side (1.4).

6. The chip (1) as claimed in one of claims 4 and 5, wherein the collecting chamber extends at least over 50% of the chip width (1.1) and at least 25% of the chip length (1.2).

7. The chip as claimed in one of claims 4 to 6, wherein the output channels (4, 5) which lead to the point beam structures (20, 30) lead across a respective connection opening (4.1, 5.1) between the upper side (1.3) and the lower side (1.4).

8. A windshield washer system of a vehicle front or rear window with a chip (1) as claimed in one of the preceding claims, which is held in a chip holder.

9. A method for producing a chip (1) for a windshield washer system of a vehicle front or rear window, wherein the chip (1) is arranged to be inserted into a chip holder of the window washer system, wherein the chip (1) has a structure (10, 20, 30) for generating a spray beam, wherein the structure (10, 20, 30) has at an end face of the chip (1) an outlet opening (11, 21, 31) having an opening edge (11.1, 21.1, 31.1), wherein the outlet opening (11, 21, 31) is configured to allow the spray beam to emerge from the chip (1) during operation of the windshield washer nozzle system onto the vehicle front or rear window; including the step - casting the chip (1) by means of an injection molding process: wherein the outlet opening (11, 21, 31) and the opening edge (11.1, 21.1, 31.1) are formed all around and integrally by means of the injection molding process such that the outlet opening (11, 21, 31) is delimited continuously over the entire opening circumference by the chip (1) by means of the opening edge (11.1, 21.1, 31.1).

## Patentansprüche

1. Chip (1) für eine Scheibenwaschanlage einer Front- oder Heckscheibe eines Fahrzeugs, wobei der Chip (1) in einem Spritzgießverfahren spritzgegossen ist, wobei der Chip (1) dafür ausgelegt ist, in eine Chiphalterung der Scheibenwaschanlage eingesteckt zu werden, wobei der Chip (1) eine Struktur (10, 20, 30) zum Erzeugen eines Sprühstrahls aufweist, wobei die Struktur (10, 20, 30) an einer Endfläche des Chips (1) eine Auslassöffnung (11, 21, 31) mit einem Öffnungsrand (11.1, 21.1, 31.1) besitzt, wobei die Auslassöffnung (11, 21, 31) dafür ausgelegt ist zu ermöglichen, dass der Sprühstrahl während des Betriebs der Scheibenwaschdüsenanlage aus dem Chip (1) auf die Front- oder Heckscheibe austritt, **dadurch gekennzeichnet, dass** die Öffnung (11, 21, 31) durch den Öffnungsrand (11.1, 21.1, 31.1) rund um den gesamten Umfang der Öffnung durch den Chip (1) begrenzt ist und dass die Auslassöffnung (11, 21, 31) und der Öffnungsrand (11.1, 21.1, 31.1) rundum und in einem Stück mittels des Spritzgießverfahrens ausgebildet sind.

2. Chip (1) nach Anspruch 1, wobei die Auslassöffnung (11, 21, 31) eine Mittelachse (11.2) aufweist und der Chip eine horizontale Mittelebene (1.5) aufweist, wobei die Mittelachse (11.2) bezogen auf die horizontale Ebene (1.5) in einem Winkel (11.3) geneigt ist.

3. Chip (1) nach einem der vorstehenden Ansprüche, wobei die Struktur (10) eine Oszillationsstruktur (10) ist und der Sprühstrahl ein oszillierender Sprühstrahl ist.

4. Chip (1) nach Anspruch 3, wobei der Chip (1) eine Oberseite (1.3) und eine Unterseite (1.4) besitzt und wobei der Chip (1) ferner zwei Punktstrahlstrukturen (20, 30) umfasst, um jeweils einen Punktstrahl zu erzeugen, und wobei die Punktstrahlstrukturen (20, 30) an einer von Oberseite (1.3) und Unterseite (1.4) angeordnet sind und die Oszillationsstruktur (10) an der entsprechenden anderen von Oberseite (1.3) bzw. Unterseite (1.4) angeordnet ist, wobei der Chip (1) eine Sammelkammer (2) aufweist, aus der drei getrennte Ausgangskanäle (3, 4, 5) jeweils zu einer der drei Strukturen (10, 20, 30) führen.

5. Chip (1) nach Anspruch 4, wobei die Sammelkammer (2) zur Oberseite (1.3) und zur Unterseite (1.4) hin offen ist.

6. Chip (1) nach einem der Ansprüche 4 und 5, wobei sich die Sammelkammer über wenigstens 50 % der Chipbreite (1.1) und wenigstens 25 % der Chiplänge (1.2) erstreckt.

7. Chip nach einem der Ansprüche 4 bis 6, wobei die Ausgangskanäle (4, 5), die zu den Punktstrahlstrukturen (20, 30) führen, über eine jeweilige Verbindungsöffnung (4.1, 5.1) zwischen der Oberseite (1.3) und der Unterseite (1.4) führen.

8. Scheibenwaschanlage einer Front- oder Heckscheibe eines Fahrzeugs mit einem Chip (1) nach einem der vorstehenden Ansprüche, der in einer Chiphalterung gehalten ist.

9. Verfahren zum Herstellen eines Chips (1) für eine Scheibenwaschanlage einer Front- oder Heckscheibe eines Fahrzeugs, wobei der Chip (1) dafür ausgelegt ist, in eine Chiphalterung der Scheibenwaschanlage eingesteckt zu werden, wobei der Chip (1) eine Struktur (10, 20, 30) zum Erzeugen eines Sprühstrahls aufweist, wobei die Struktur (10, 20, 30) an einer Endfläche des Chips (1) eine Auslassöffnung (11, 21, 31) mit einem Öffnungsrand (11.1, 21.1, 31.1) besitzt, wobei die Auslassöffnung (11, 21, 31) dafür ausgelegt ist zu ermöglichen, dass der Sprühstrahl während des Betriebs der Scheibenwaschdüsenanlage aus dem Chip (1) auf die Front- oder Heckscheibe austritt; den Schritt beinhaltend - Gießen des Chips (1) mittels eines Spritzgießverfahrens: wobei die Auslassöffnung (11, 21, 31) und der Öffnungsrand (11.1, 21.1, 31.1) rundum und in einem Stück mittels des Spritzgießverfahrens ausgebildet sind, so dass die Auslassöffnung (11, 21, 31) durchgängig über den gesamten Umfang der Öffnung durch den Chip (1) mittels des Öffnungsrandes (11.1, 21.1, 31.1) begrenzt ist.

## Revendications

1. Plaquette (1) pour un système de lave-glace d'une vitre de véhicule avant ou arrière, dans laquelle la plaquette (1) est moulée par injection par un processus de moulage par injection, la plaquette (1) étant agencée pour être insérée dans un support de plaquette du système de lave-glace, dans laquelle la plaquette (1) présente une structure (10, 20, 30) pour générer un jet de pulvérisation, dans laquelle la structure (10, 20, 30) présente à une face d'extrémité de la plaquette (1) une ouverture de sortie (11, 21, 31) présentant un bord d'ouverture (11.1, 21.1, 31.1), dans laquelle l'ouverture de sortie (11, 21, 31) est configurée pour permettre au jet de pulvérisation d'émerger de la plaquette (1) pendant le fonctionnement du système de buse de lave-glace sur la vitre de véhicule avant ou arrière,
**caractérisée en ce que** l'ouverture (11, 21, 31) est délimitée par le bord d'ouverture (11.1, 21.1, 31.1) tout autour de la circonférence d'ouverture complète par la plaquette (1), et l'ouverture de sortie (11, 21, 31) et le bord d'ouverture (11.1, 21.1, 31.1) sont formés tout autour et intégralement au moyen du processus de moulage par injection.

2. Plaquette (1) selon la revendication 1, dans laquelle l'ouverture de sortie (11, 21, 31) présente un axe central (11.2) et la plaquette présente un plan central horizontal (1.5), l'axe central (11.2) étant incliné par rapport au plan horizontal (1.5) selon un angle (11.3).

3. Plaquette (1) selon l'une quelconque des revendications précédentes, dans laquelle la structure (10) est une structure à oscillation (10) et le jet de pulvérisation est un jet de pulvérisation oscillant.

4. Plaquette (1) selon la revendication 3, dans laquelle la plaquette (1) présente un côté supérieur (1.3) et un côté inférieur (1.4), et dans laquelle la plaquette (1) comprend en outre deux structures de jet concentré (20, 30) pour générer chacune un jet concentré respectif, et dans laquelle les structures de jet concentré (20, 30) sont agencées sur l'un du côté supérieur (1.3) et du côté inférieur (1.4), et la structure d'oscillation (10) est agencée sur l'autre côté correspondant du côté supérieur (1.3) et du côté inférieur (1.4), dans laquelle la plaquette (1) présente une chambre de collecte (2) à partir de laquelle respectivement trois canaux de sortie séparés (3, 4, 5) mènent à l'une des structures (10, 20, 30).

5. Plaquette (1) selon la revendication 4, dans laquelle la chambre de collecte (2) est ouverte vers le côté supérieur (1.3) et le côté inférieur (1.4).

6. Plaquette (1) selon l'une quelconque des revendications 4 et 5, dans laquelle la chambre de collecte s'étend sur au moins 50 % de la largeur de plaquette (1.1) et au moins 25 % de la longueur de plaquette (1.2).

7. Plaquette selon l'une quelconque des revendications 4 à 6, dans laquelle les canaux de sortie (4, 5) qui mènent aux structures de jet concentré (20, 30) passent à travers une ouverture de connexion respective (4.1, 5.1) entre le côté supérieur (1.3) et le côté inférieur (1.4).

8. Système de lave-glace d'une vitre de véhicule avant ou arrière avec une plaquette (1) selon l'une quelconque des revendications précédentes, qui est maintenue dans un support de plaquette.

9. Procédé de fabrication d'une plaquette (1) pour un système de lave-glace d'une vitre de véhicule avant ou arrière, dans lequel la plaquette (1) est agencée pour être insérée dans un support de plaquette du système de lave-glace, dans lequel la plaquette (1) présente une structure (10, 20, 30) pour générer une jet de pulvérisation, dans lequel la structure (10, 20, 30) présente à une face d'extrémité de la plaquette (1) une ouverture de sortie (11, 21, 31) présentant un bord d'ouverture (11.1, 21.1, 31.1), dans lequel l'ouverture de sortie (11, 21, 31) est configurée pour permettre au jet de pulvérisation d'émerger de la plaquette (1) pendant le fonctionnement du système de buse de lave-glace sur la vitre de véhicule avant ou arrière ;
comprenant l'étape consistant à couler la plaquette (1) au moyen d'un processus de moulage par injection : l'ouverture de sortie (11, 21, 31) et le bord d'ouverture (11.1, 21.1, 31.1) étant formés tout autour et intégralement au moyen du processus de moulage par injection de sorte que l'ouverture de sortie (11, 21, 31) est délimitée en continu sur toute la circonférence d'ouverture par la plaquette (1) au moyen du bord d'ouverture (11.1, 21.1, 31.1).
